(19) Europäisches Patentamt
European Patent Office
Office européen des brevets

(11) **EP 1 835 001 A1**

(12) **EUROPEAN PATENT APPLICATION**
published in accordance with Art. 158(3) EPC

(43) Date of publication:
**19.09.2007 Bulletin 2007/38**

(51) Int Cl.:
*C09D 171/02* (2006.01)   *C08J 7/04* (2006.01)
*C09D 4/00* (2006.01)   *C09D 7/12* (2006.01)
*C09D 183/04* (2006.01)   *G02B 1/10* (2006.01)
*G11B 7/24* (2006.01)   *G11B 7/254* (2006.01)
*G11B 7/257* (2006.01)   *C08L 101/00* (2006.01)

(21) Application number: **05809498.8**

(22) Date of filing: **22.11.2005**

(86) International application number:
**PCT/JP2005/021463**

(87) International publication number:
**WO 2006/070543 (06.07.2006 Gazette 2006/27)**

(84) Designated Contracting States:
**AT DE FR GB NL**

(30) Priority: **28.12.2004 JP 2004382026**

(71) Applicant: **Lintec Corporation**
**Tokyo 173-0001 (JP)**

(72) Inventors:
• **HONGO, Yuki**
**1650034 Tokyo (JP)**

• **TOMIOKA, Kenta**
**3360026 Saitama (JP)**
• **SHOSHI, Satoru**
**3430032 Saitama (JP)**

(74) Representative: **Cresswell, Thomas Anthony**
**J.A. KEMP & CO.**
**14 South Square**
**Gray's Inn**
**London WC1R 5JJ (GB)**

(54) **COMPOSITION FOR COATING, HARD COAT FILM AND OPTICAL RECORDING MEDIUM**

(57)    A coating composition containing reactive particles (A) in which an organic compound having at least one polymerizable unsaturated group in a molecule thereof is chemically bonded to inorganic oxide particles, an organic compound monomer or oligomer (B) having a polyethylene oxide chain (content in molecule: not less than 50% and less than 100%) and at least two polymerizable unsaturated groups in a molecule thereof and not having an aromatic ring and an alkyl chain having seven or more carbon atoms, an organic compound monomer or oligomer (C) having at least two polymerizable unsaturated groups in a molecule thereof, being an organic compound monomer or oligomer other than the organic compound monomer or oligomer (B), and a siloxane compound (D) having a dialkyl siloxane backbone is applied onto one surface of a base material film 11, and cured by irradiating with ionizing radiation, so as to form a hard coat layer 12 of thickness from 0.1 to 20 μm. This hard coat layer 12 has both excellent fingerprint wipability and excellent antistatic performance.

Fig.1

**Description**

TECHNICAL FIELD

The present invention relates to a coating composition, a hard coat film, and an optical recording medium, and in particular relates to a coating composition, a hard coat film, and an optical recording medium having both excellent fingerprint wipability and excellent antistatic performance.

BACKGROUND ART

For Blu-ray disks developed in recent years, to realize a high recording capacity of 25 GB, a short wavelength laser and a high aperture ratio lens are used so as to increase the recording density.

With such a Blu-ray disk, as for existing optical disks (CDs, DVDs, etc.), a protective film comprising a polycarbonate is bonded to a data recording layer so as to protect the data recording layer. However, a Blu-ray disk has a very high data recording capacity and density as described above, and hence if the protective film is even slightly scratched, errors may arise in reading/writing of data; a hard coat layer for surface protection has thus become indispensable.

Moreover, with a Blu-ray disk, as with scratches, the signal characteristics may worsen and errors arise due to fingerprints or electrostatically attached dust; the hard coat layer must thus be given fingerprint wipability and antistatic performance.

To give the hard coat layer fingerprint wipability, there is a method in which a dimethylsiloxane compound, a fluorinated surfactant, a stain-proofing agent or the like is added to the composition for forming the hard coat layer so as to confer water/oil repellency.

On the other hand, to give the hard coat layer antistatic performance, there is a method in which a metal oxide is added to the composition for forming the hard coat layer or a method in which an antistatic agent is added to the composition for forming the hard coat layer so as to confer hydrophilicity. However, the former method brings about a decrease in the transmittance of the hard coat layer obtained, and hence is unsuitable for optical disks, and moreover the latter method has a problem of the performance deteriorating over time.

Furthermore, the fingerprint wipability and the antistatic performance have a conflicting relationship of conferring water repellency and conferring hydrophilicity respectively as described above, and hence it has been difficult to give a single hard coat layer both of these properties.

Here, as one example, in Japanese Patent Application Laid-open No. 6-195749, there is disclosed an optical disk having a hard coat layer obtained by curing a UV-curable resin composition containing an antistatic agent and a slip agent, this being to improve surface dust wipability and abrasion resistance while maintaining high antistatic performance and good surface appearance.

DISCLOSURE OF THE INVENTION

PROBLEM TO BE SOLVED BY THE INVENTION

As the antistatic agent in the invention described in Japanese Patent Application Laid-open No. 6-195749, there is used a compound having both a hydrophilic part and a hydrophobic part in the molecule thereof, specifically there is used an ethylene oxide-modified phosphate methacrylate (made by Daihachi Chemical Industry Co., Ltd., MR-200, polyethylene oxide content: 21. 0 to 27.3%). However, the antistatic effect in the case of using this antistatic agent has not been adequate.

Moreover, with the invention described in Japanese Patent Application Laid-open No. 6-195749, the compatibility between the antistatic agent and the slip agent is poor, with the resin composition being prone to become cloudy, and hence the amount that can be added of the slip agent is limited; the fingerprint wipability effect due to the addition of the slip agent has thus not necessarily been adequate.

The present invention has been accomplished in view of the above state of affairs; it is an object of the present invention to provide a coating composition, a hard coat film, and an optical recording medium having both excellent fingerprint wipability and excellent antistatic performance.

MEANS FOR SOLVING THE PROBLEM

To attain the above object, firstly, the present invention provides a coating composition comprising reactive particles (A) in which an organic compound having at least one polymerizable unsaturated group in a molecule thereof is chemically bonded to inorganic oxide particles, an organic compound monomer or oligomer (B) having a polyethylene oxide chain and at least two polymerizable unsaturated groups in a molecule thereof and not having an aromatic ring and an alkyl chain having seven or more carbon atoms, an organic compound monomer or oligomer (C) having at least two polymerizable unsaturated groups in a molecule thereof, being an organic compound monomer or oligomer other than the organic compound monomer or oligomer (B), and a siloxane compound (D) having a dialkyl siloxane backbone, wherein a content of the organic compound monomer or oligomer (B) is in a range of from 20 to 80 wt%, and the organic compound monomer or oligomer (B) has a polyethylene oxide content as calculated using the following formula of not less than 50% and less than 100% (invention 1).

$$\text{Polyethylene oxide content} = (\text{total atomic weight of } C_2H_4O$$

$$\text{parts} / \text{molecular weight of organic compound monomer or oligomer}$$

$$(B)) \times 100$$

A coating layer obtained by curing the coating composition according to the above invention (invention 1) has excellent antistatic performance due to the coating composition containing the first organic compound (B) which is able to confer hydrophilicity, and excellent fingerprint wipability due to the coating composition containing the siloxane compound (D) which is able to give water/oil repellency. Furthermore, the first organic compound (B) has excellent compatibility with the siloxane compound (D), and hence there is no need to make the content of the siloxane compound (D) low. In this way, according to the above invention (invention 1), both excellent fingerprint wipability and excellent antistatic performance can be achieved.

In the case of the coating composition according to the above invention (invention 1), preferably, the siloxane compound (D) is a siloxane compound (D1) having a dialkyl siloxane backbone and having at least one polymerizable unsaturated group in a molecule thereof, and the coating composition substantially does not contain a siloxane compound (D2) having a dialkyl siloxane backbone and not having a polymerizable unsaturated group in a molecule thereof (invention 2).

According to the above invention (invention 2), free siloxane compound can be excluded from the coating layer, and hence white wiping marks produced upon mixing together of such a siloxane compound and an oily component from a finger forming a fingerprint can be prevented.

The coating composition according to either of the above inventions (inventions 1 and 2) may further contain a fluorinated compound (E) (invention 3). Through the fluorinated compound (E), the effect of the siloxane compound (D) is further improved.

In the case of any of the above inventions (inventions 1 to 3), preferably, the total (in terms of solids) of the content of the siloxane compound (D) having the dialkyl siloxane backbone and the content of the fluorinated compound (E) is in a range of from 2 to 80 wt% (invention 4). The first organic compound (B) has excellent compatibility with the siloxane compound (D) and the fluorinated compound (E), and hence the coating composition can contain these water/oil-repellent components in such a range, whereby excellent fingerprint wipability can be exhibited.

Secondly, the present invention provides a hard coat film comprising a base material film, and a hard coat layer of thickness from 0.1 to 20 $\mu$m obtained by applying the coating composition as above (any of inventions 1 to 4) onto at least one surface of the base material film, and curing (invention 5).

Due to the use of the above coating composition, the hard coat film according to the above invention (invention 5) has both excellent fingerprint wipability and excellent antistatic performance.

In the case of the above invention (invention 5), in the case of using the hard coat film as an optical film, preferably, the spectral transmittance of the hard coat film at 400 nm wave length is not less than 85% (invention 6).

Thirdly, the present invention provides an optical recording medium having a hard coat film as above (invention 5 or 6) (invention 7).

Due to the use of the above hard coat film, the optical recording medium according to the above invention (invention 8) has a surface having both excellent fingerprint wipability and excellent antistatic performance. The error rate caused by fingerprints or electrostatically attached dust is thus low.

"Optical recording medium" in the present specification means a medium for which recording and playback of data can be carried out optically; included under this are mainly read-only, write-once or rewritable disk-shaped media (so-called optical disks (including optical magnetic disks) such as a CD, a CD-ROM, a CD-R, a CD-RW, a DVD, a DVD-ROM, a DVD-R, a DVD-RW, a DVD-RAM, an LD, a Blu-ray Disk, an MO, or the like), although there is no limitation thereto.

EFFECTS OF THE INVENTION

According to the present invention, there can be obtained a coating composition, a hard coat film, and an optical recording medium having both excellent fingerprint wipability and excellent antistatic performance.

BRIEF DESCRIPTION OF THE DRAWINGS

FIG. 1 is a sectional view of a hard coat film according to an embodiment of the present invention; and
FIG. 2 is a sectional view of an optical disk according to an embodiment of the present invention.

EXPLANATION OF REFERENCE NUMERALS

1: Hard coat film

11: Base material film
12: Hard coat layer

2: Optical disk

21: Optical disk substrate
22: Data recording layer
23: Adhesive layer

BEST MODE FOR CARRYING OUT THE INVENTION

Following is a description of an embodiment of the present invention.

[Coating composition]

A coating composition according to the present embodiment contains reactive particles (A) in which an organic compound having at least one polymerizable unsaturated group in a molecule thereof is chemically bonded to inorganic oxide particles, an organic compound monomer or oligomer (B) having a polyethylene oxide chain and at least two polymerizable unsaturated groups in a molecule thereof and not having an aromatic ring and an alkyl chain having 7 or more carbon atoms (hereinafter sometimes referred to as the "first organic compound"), an organic compound monomer or oligomer (C) having at least two polymerizable unsaturated groups in a molecule thereof other than the first organic compound (B) (hereinafter sometimes referred to as the "second organic compound"), and a siloxane compound (D) having a dialkyl siloxane backbone, and if desired also a fluorinated compound (E).

A. Reactive particles

The reactive particles (A) are particles in which an organic compound having at least one polymerizable unsaturated group in a molecule thereof is chemically bonded to inorganic oxide particles. Through the coating composition according to the present embodiment containing the reactive particles (A), the abrasion resistance of a coating layer obtained by curing the coating composition can be improved, and moreover the cure shrinkage of the coating composition can be reduced, and hence warping of the hard coat film obtained can be suppressed.

As the reactive particles (A), there can be used, for example, the reactive particles (A) described in Japanese Patent Application Laid-open No. 2000-273272; following is a specific description.

Examples of the inorganic oxide particles in the reactive particles (A) are particles of silica, alumina, zirconia, titanium oxide, zinc oxide, germanium oxide, indium oxide, tin oxide, antimony oxide, cerium oxide, and so on; one of these may be used alone, or two or more of these may be used in combination.

In the case of using the coating composition to form a coating layer (hard coat layer) for an optical film or optical product, it is preferable to use silica particles, which have low light absorption and thus have high optical transparency, as the inorganic oxide particles.

The inorganic oxide particles preferably have a mean particle diameter in a range of from 0.001 to 2 $\mu$m,

particularly preferably from 0.001 to 0.2 $\mu$m, yet more preferably from 0.001 to 0.1 $\mu$m. If the mean particle diameter of the inorganic oxide particles exceeds 2 $\mu$m, then the optical transparency of the coating layer obtained by curing the coating composition may decrease, and the surface smoothness of the coating layer may become poor.

The form of the inorganic oxide particles may be any of spherical, hollow, porous, rod-shaped, plate-shaped, fibrous, or irregularly shaped; spherical is particularly preferable.

In the reactive particles (A), an organic compound (a) having at least one polymerizable unsaturated group in a molecule thereof is chemically bonded to the inorganic oxide particles. Examples of the polymerizable unsaturated group possessed by the organic compound (a) include an acryloyl group, a methacryloyl group, a vinyl group, a propenyl group, a butadienyl group, a styryl group, an ethynyl group, a cinnamoyl group, a maleate group, and an acrylamide group.

There are no particular limitations on the number of polymerizable unsaturated groups in the organic compound (a) so long as this number is at least one per molecule, but this number is generally from 1 to 4.

Other than polymerizable unsaturated groups as described above, it is preferable for the organic compound (a) to contain a group represented by the formula [-X-C(=Y)-NH-] (wherein X is NH, O or S, and Y is O or S). It is also preferable for the organic compound (a) to be a compound having a silanol group in the molecule thereof, or a compound in which a silanol group is produced through hydrolysis.

The reactive particles (A) can be produced by reacting the inorganic oxide particles and the organic compound (a) together. It is thought that a component able to react with the organic compound (a) exists on the surface of the inorganic oxide particles, and hence the reactive particles (A) can be obtained by mixing together the organic compound (a) and the inorganic oxide particles in a powdered form or a solvent-dispersed sol of the inorganic oxide particles either in or not in the presence of water, and heating and stirring, whereby the surface component of the inorganic oxide particles reacts with the organic compound (a).

The content (in terms of solids) of the reactive particles (A) in the coating composition is preferably in a range of from 5 to 80 wt%, particularly preferably from 10 to 70 wt%. If the content of the reactive particles (A) is less than 5 wt%, then the hardness of the coating layer obtained may be insufficient, whereas if the content of the reactive particles (A) exceeds 80 wt%, then sufficient antistatic performance may not be obtained, and moreover the curability of the coating composition may become poor.

B. First organic compound

The first organic compound (B) is an organic compound monomer or oligomer having a polyethylene oxide chain and at least two polymerizable unsaturated groups in a molecule thereof and not having an aromatic ring and an alkyl chain having 7 or more carbon atoms.

For the coating composition according to the present embodiment, the hydrophilicity is improved through the polyethylene oxide chain possessed by the first organic compound (B), and hence the coating layer obtained by curing the coating composition can be made to have excellent antistatic performance. Moreover, the first organic compound (B) has excellent compatibility with the siloxane compound (D) and the fluorinated compound (E), and hence the coating composition can adequately contain these water/oil-repellent components.

The reason for the first organic compound (B) not having an aromatic ring and an alkyl chain having 7 or more carbon atoms in the molecule thereof is that such aromatic rings and alkyl chains having 7 or more carbon atoms are lipophilic, and hence if such a backbone were contained, then the hydrophilicity and thus the antistatic performance of the coating layer obtained by curing the coating composition would decrease.

The content of polyethylene oxide (hereinafter sometimes referred to as "EO") in the first organic compound (B) is not less than 50% and less than 100%, preferably in a range of from 70 to 95%. If the EO content is less than 50%, then the improvement in the hydrophilicity and hence the antistatic performance due to the first organic compound may be insufficient, and moreover the curl amount of the hard coat film when manufacturing the hard coat film may become high. In particular, if the EO content is in a range of from 70 to 95%, then a coating layer having both excellent hardness and excellent antistatic performance can be obtained.

The EO content is calculated using the following formula.

$$\text{EO content} = (\text{total atomic weight of } C_2H_4O \text{ parts} / \text{molecular weight of first organic compound}) \times 100$$

Examples of the polymerizable unsaturated groups possessed by the first organic compound (B) include acryloyl groups, methacryloyl groups, vinyl groups, and epoxy groups; of these, acryloyl groups and methacryloyl groups are particularly preferable.

There are no particular limitations on the number of polymerizable unsaturated groups in the first organic compound (B) so long as this number is at least two per molecule, but this number is generally from 2 to 6.

Moreover, the first organic compound (B) is preferably nonionic, whereby the compatibility with the siloxane compound (D) and the fluorinated compound (E) is further increased.

The first organic compound (B) is preferably a polyfunctional (meth) acrylate monomer or oligomer having an EO content of not less than 50%. As such a first organic compound, there can be used, for example, EO-modified pentaerythritol tetra(meth)acrylate, EO-modified trimethylolpropane tri(meth)acrylate, EO-modified glycerol tri(meth)acrylate, EO-modified neopentyl glycol di (meth) acrylate, or polyethylene glycol di (meth) acrylate, having an EO content of not less than 50%. One of these polyfunctional (meth) acrylates may be used alone, or two or more of these may be used in combination.

In the case of using the first organic compound (B) in the form of an oligomer, the weight average molecular weight thereof is preferably not more than approximately 10,000. If the weight average molecular weight exceeds 10,000, then the hardness of the coating layer may become insufficient.

The content (in terms of solids) of the first organic compound (B) in the coating composition is in a range of from 20 to 80 wt%, preferably from 30 to 70 wt%. If the content of the first organic compound (B) is less than 20 wt%, then the antistatic performance of the coating layer obtained by curing the coating composition is insufficient, whereas if the content of the first organic compound (B) exceeds 80 wt%, then the hardness of the coating layer obtained is insufficient.

C. Second organic compound

The second organic compound (C) is an organic compound monomer or oligomer having at least two polymerizable unsaturated groups in a molecule thereof other than the first organic compound (B) described above.

Through the coating composition according to the present embodiment containing the second organic compound (C), the coating layer obtained by curing the coating composition can be given anti-scratch performance, and hence the abrasion resistance of the coating layer can be improved.

Examples of the polymerizable unsaturated groups possessed by the second organic compound (C) include acryloyl groups, methacryloyl groups, vinyl groups, and epoxy groups; of these, acryloyl groups and methacryloyl groups are particularly preferable. That is, the second organic compound (C) is preferably a (meth)acrylic acid ester monomer or oligomer.

There are no particular limitations on the number of polymerizable unsaturated groups in the second organic compound (C) so long as this number is at least two per molecule, but this number is generally from 2 to 6.

There are no particular limitations on the second organic compound (C), but so as not to impair the hydrophilicity given to the coating composition by the first organic compound (B), the second organic compound (C) preferably does not have an aromatic ring and an alkyl chain having 7 or more carbon atoms in the molecule thereof.

As the second organic compound (C), there can be used, for example, a polyfunctional (meth)acrylate such as 1,4-butanediol di(meth)acrylate, 1,6-hexanediol di(meth)acrylate, neopentyl glycol di(meth)acrylate, neopentyl glycol adipate di(meth)acrylate, neopentyl glycol hydroxypivalate di(meth)acrylate, dicyclopentanyl di(meth)acrylate, caprolactone-modified dicyclopentenyl di(meth)acrylate, allylated cyclohexyl di(meth)acrylate, isocyanurate di(meth)acrylate, trimethylolpropane tri(meth)acrylate, dipentaerythritol tri(meth)acrylate, propionic acid-modified dipentaerythritol tri(meth)acrylate, pentaerythritol tri(meth)acrylate, pentaerythritol tetra(meth)acrylate, tris(acryloxyethyl) isocyanurate, propionic acid-modified dipentaerythritol penta(meth)acrylate, dipentaerythritol hexa(meth)acrylate, and caprolactone-modified dipentaerythritol hexa (meth) acrylate. One of these polyfunctional acrylates may be used alone, or two or more of these may be used in combination.

In the case of using the second organic compound (C) in the form of an oligomer, the weight average molecular weight thereof is preferably not more than approximately 1000. If the weight average molecular weight exceeds approximately 1000, then the curing density of the coating layer may decrease, and hence a sufficient surface hardness may not be obtained.

The content (in terms of solids) of the second organic compound (C) in the coating composition is preferably in a range of from 10 to 70 wt%, particularly preferably from 15 to 50 wt%. If the content of the second organic compound (C) is less than 10 wt%, then the anti-scratch performance of the coating layer obtained by curing the coating composition may not be sufficient, whereas if the content of the second organic compound (C) exceeds 70 wt%, then the contents of the other components decreases relatively, and hence the effects such as antistatic performance may not be obtained sufficiently.

D. Siloxane compound

The siloxane compound (D) is a compound having a dialkyl siloxane backbone. This siloxane compound (D) is able to give the coating layer obtained by curing the coating composition water/oil repellency, and hence through the coating composition according to the present embodiment containing the siloxane compound (D), the coating layer obtained can be made to have excellent fingerprint wipability.

The siloxane compound (D) is preferably a siloxane compound (D1) having a dialkyl siloxane backbone and having at least one polymerizable unsaturated group in the molecule thereof, and moreover the coating composition according to the present embodiment preferably substantially does not contain a siloxane compound (D2) having a dialkyl siloxane backbone and not having a polymerizable unsaturated group in the molecule thereof.

Such a siloxane compound (D2) exists in a free state in the coating layer obtained by curing the coating composition; if an oily component from a finger forming a fingerprint becomes attached to the surface of the coating layer, then a mixture of this oily component and the siloxane compound (D2) becomes white, and hence when the fingerprint is wiped off, a white mark may remain on the surface of the coating layer. Note, however, that in the case that the surface of the coating layer is required to be slippery, the coating composition may contain such a siloxane compound (D2).

Here, as each alkyl group contained in the backbone of the siloxane compound (D), an alkyl group having from 1 to 4 carbon atoms such as methyl, ethyl, propyl or butyl is preferable. The backbone of the siloxane compound (D) may further contain an aryl group such as phenyl or methylphenyl, and moreover different alkyls or aryls may be contained in the same backbone, but it is particularly preferable for at least one methyl to be contained. If a methyl is contained, then excellent oil repellency is exhibited.

Furthermore, included under the siloxane compound (D) are ones having fluorine atoms in the molecule thereof.

Examples of the polymerizable unsaturated group possessed by the siloxane compound (D1) include a (meth) acryloyl group, a vinyl group, and an epoxy group. Specific examples of the siloxane compound (D1) include, for dialkyl siloxanes, (meth)acryloyl group-terminated polydimethylsiloxane (BYK-UV3570 made by BYK-Chemie Japan; Silaplane FM-0711, Silaplane FM-7711 made by Chisso Corporation), vinyl group-terminated polydimethylsiloxane (Silaplane FM-2231 made by Chisso Corporation), and epoxy group-terminated polydimethylsiloxane (Silaplane FM-0511, Silaplane FM-5511 made by Chisso Corporation).

Examples of a siloxane compound (D2) are polyalkylsiloxanes, and also modified polyalkylsiloxanes in which alkyl groups at both ends or one end or on side chains of a polyalkylsiloxane are substituted with another functional group. One such polyalkylsiloxane or modified polyalkylsiloxane may be used alone, or two or more of these may be used in combination.

Specific examples of modified polyalkylsiloxanes include polydimethylsiloxane (PS040 made by Chisso Corporation; SH28PA made by Dow Corning Toray Silicones), polyether-modified polydimethylsiloxane (BYK-300 made by BYK-Chemie Japan), polydimethylsiloxane modified with a silanol at one end thereof or at both ends thereof (PS340. 5/PS-341 made by Chisso Corporation), polydimethylsiloxane having amino-modified side chains (KF-859/KF-865 made by Shin-Etsu Silicones), a polysiloxane having carbinol-modified side chains (SF8428 made by Toray Silicones), polydimethylsiloxane having carboxy-modified side chains (X-22-3710 made by Shin-Etsu Silicones), and polydimethylsiloxane having both ends carboxyl-modified (BY16-750 made by Toray Silicones).

The weight average molecular weight of the siloxane compound (D) is preferably in a range of from 300 to 200,000, particularly preferably from 500 to 20,000.

The content (in terms of solids) of the siloxane compound (D) in the coating composition is preferably in a range of from 0.1 to 80 wt%, particularly preferably from 2 to 80 wt%, yet more preferably from 2 to 50 wt%. If the content of the siloxane compound (D) is less than 0. 1 wt%, then the fingerprint wipability of the coating layer obtained by curing the coating composition may be insufficient. Moreover, the fingerprint wipability of the coating layer obtained is particularly good if the content of the siloxane compound (D) is not less than 2 wt%. On the other hand, if the content of the siloxane compound (D) exceeds 80 wt%, then sufficient antistatic performance is not obtained.

E. Fluorinated compound

A fluorinated compound (E) is able to markedly increase the contact angle for the coating layer obtained by curing the coating composition; through the coating composition according to the present embodiment containing such a fluorinated compound (E), the coating layer obtained can thus be made to have yet better fingerprint wipability.

The fluorinated compound (E) is preferably a fluorinated compound (E1) having at least one polymerizable unsaturated group in the molecule thereof, and moreover the coating composition according to the present embodiment preferably substantially does not contain a fluorinated compound (E2) not having a polymerizable unsaturated group in the molecule thereof. Examples of the polymerizable unsaturated group include a (meth)acryloyl group, a vinyl group, and an epoxy group.

Such a fluorinated compound (E2) exists in a free state in the coating layer obtained by curing the coating composition; if an oily component of a fingerprint becomes attached to the surface of the coating layer, then a mixture of this oily component and the fluorinated compound (E2) becomes white, and hence when the fingerprint is wiped off, a white mark may remain on the surface of the coating layer. Note, however, that in the case that the surface of the coating layer is required to be slippery, the coating composition may contain such a fluorinated compound (E2).

The total (in terms of solids) of the content of the fluorinated compound (E) and the content of the siloxane compound (D) in the coating composition is preferably in a range of from 0.1 to 80 wt%, particularly preferably from 2 to 80 wt%, yet more preferably from 2 to 50 wt%.

F. Other components

The coating composition may contain components other than above (A) to (E). Examples of such other components include polymerization initiators, sensitizers, solvents, particles other than the reactive particles (A), and various additives.

As a polymerization initiator, it is preferable to use an ionizing radiation polymerization initiator; in the case of using ultraviolet rays as the ionizing radiation, for example, it is preferable to use a photopolymerization initiator such as benzophenone, acetophenone, benzoin, benzoinmethyl ether, benzoin ethyl ether, benzoin isopropyl ether, benzoin isobutyl ether, benzoin benzoic acid, benzoin methyl benzoate, benzoin dimethyl ketal, 2, 4-diethylthioxanthone, 1-hydroxycyclohexyl phenyl ketone, benzyl diphenyl sulfide, tetramethylthiuram monosulfide, azobisisobutyronitrile, benzyl, dibenzyl, diacetyl, β-chloro-anthraquinone, (2,4,6-trimethyl benzyl diphenyl)phosphine oxide, 2-benzothiazole-N,N-diethyl dithiocarbamate, and oligo{2-hydroxy-2-methyl-1-[4-(1-propenyl)phenyl]propanone}.

The content (in terms of solids) of the polymerization initiator in the coating composition is preferably in a range of from 0.1 to 20 wt%, particularly preferably from 0.5 to 10 wt%.

A solvent can be used for improving the coatability, adjusting the viscosity, adjusting the solid concentration and so on; for example, there can be used an alcohol such as methanol, ethanol, isopropanol, butanol or octanol, a ketone such as acetone, methyl ethyl ketone, methyl isobutyl ketone or cyclohexanone, an ester such as ethyl acetate, butyl acetate, ethyl lactate or γ-butyrolactone, an ether such as ethylene glycol monomethyl ether (methyl cellosolve), ethylene glycol monoethyl ether (ethyl cellosolve), diethylene glycol monobutyl ether (butyl cellosolve) or propylene glycol monomethyl ether, an aromatic hydrocarbon such as benzene, toluene or xylene, or an amide such as dimethylformamide, dimethylacetamide or N-methylpyrrolidone.

As particles other than the reactive particles (A), there can be used, for example, the inorganic oxide particles used as the raw material of the reactive particles (A).

Examples of additives include antioxidants, ultraviolet absorbers, photostabilizers, silane coupling agents, age resisters, thermal polymerization inhibitors, colorants, leveling agents, surfactants, storage stabilizers, plasticizers, lubricants, fillers such as inorganic fillers or organic fillers, wettability improvers, and coating surface improvers.

The coating composition as described above is applied onto a desired base material and cured, whereby a hard coat layer can be formed on the surface of the base material. Examples of the base material subjected to the coating include plastic products, metal products, glass products, and stone products.

The application of the coating composition may be carried out using an ordinary method, for example by bar coating, knife coating, roll coating, blade coating, die coating, or gravure coating. After the application of the coating composition, the coating film is preferably dried at approximately from 50 to 120 °C.

The curing of the coating composition can be carried out by irradiating the coating film of the coating composition with ionizing radiation. As the ionizing radiation, in general ultraviolet rays, electron rays or the like are used. The ionizing radiation irradiation amount varies depending on the type of the ionizing radiation, but for example, in the case of ultraviolet rays, the radiation amount is preferably approximately from 100 to 500 mJ/cm$^2$, and in the case of electron rays, is preferably approximately from 10 to 1000 krad.

The thickness of the hard coat layer after curing is preferably in a range of from 0.1 to 20 $\mu$m, particularly preferably from 1 to 10 $\mu$m. Moreover, to further improve the effects of the hard coat layer, the thickness of the hard coat layer is particularly preferably from 2 to 10 $\mu$m. If the thickness of the hard coat layer is less than 0.1 $\mu$m, then it is difficult to obtain the desired surface hardness, whereas if the thickness of the hard coat layer exceeds 20 $\mu$m, then the hard coat layer may crack. If the thickness of the hard coat layer exceeds 10 $\mu$m, then in the case of providing the hard coat layer on a plastic film, there may be increased warping of the plastic film.

Moreover, to achieve excellent fingerprint wipability, the contact angle with n-dodecane for the surface of the hard coat layer is preferably not less than 20°, particularly preferably not less than 25°.

Through the action of the reactive particles (A) and the second organic compound (C), the hard coat layer has high hardness, and exhibits excellent anti-scratch performance and abrasion resistance. Moreover, through the action of the first organic compound (B), the hard coat layer exhibits excellent antistatic performance, and through the action of the siloxane compound (D), the hard coat layer exhibits excellent fingerprint wipability. Furthermore, even if the coated object is a plastic film, through the cure shrinkage reduction effect of predominantly the reactive particles (A), warping of the plastic film is suppressed.

[Hard coat film]

In the present embodiment, a hard coat film for protecting a data recording layer of an optical disk has been described as one example, but the hard coat film of the present invention is not limited to this usage.

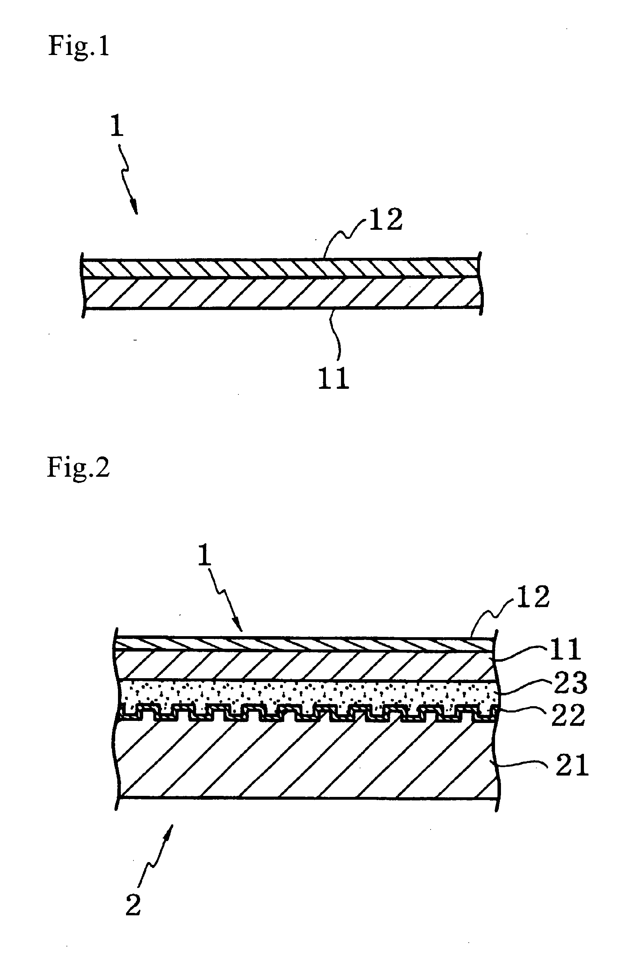

As shown in FIG. 1, the hard coat film 1 according to the present embodiment comprises a base material film 11, and a hard coat layer 12 formed on one surface of the base material film 11.

The base material film 11 preferably has sufficient optical transparency in a wavelength region of light for reading/writing data, preferably has a suitable rigidity/flexibility for easy production of an optical disk, and moreover is preferably temperature-stable for storing the optical disk. As such a base material film 11, an optically transparent film comprising a polycarbonate, a cycloolefin polymer or polymethyl methacrylate is preferable, a film comprising a polycarbonate having high adherence to the hard coat layer 12, describedbelow, is particularly preferable. In the case of using a film comprising a cycloolefin polymer, to increase the adherence to the hard coat layer 12, it is preferable to subject the surface on which the hard coat layer 12 is to be formed to corona discharge treatment.

The thickness of the base material film 11 is set in accordance with the type of the optical disk and the thickness of other constituent parts of the optical disk, but is generally approximately from 10 to 300 $\mu$m, preferably approximately from 20 to 150 $\mu$m, yet more preferably approximately from 25 to 100 $\mu$m.

The hard coat layer 12 is formed by applying on a coating composition as described above, preferably a coating composition in which the inorganic oxide particles of the reactive particles (A) are silica particles, and curing. The coating composition application method and curing method are as described above.

The surface resistance value of the hard coat film 1 varies depending on the antistatic performance required for the usage of the hard coat film 1, but is preferably not more than $1 \times 10^{15}$ $\Omega/\square$, particularly preferably not more than $1 \times 10^{14}$ $\Omega/\square$, at a temperature of 23 °C and a humidity of 50%.

The spectral transmittance at 400 nm wave length of the hard coat film 1 is preferably not less than 85%, particularly preferably not less than 88%. Through the hard coat film 1 having such a transmittance, the hard coat film 1 is suitable for use in an optical disk.

Because the hard coat film 1 according to the present embodiment has the hard coat layer 12 obtained by curing the coating composition as described above, the hard coat film 1 has excellent anti-scratch performance and abrasion resistance, and also has both excellent fingerprint wipability and excellent antistatic performance, and moreover warping is suppressed.

The hard coat film 1 according to the present embodiment comprises the base material film 11 and the hard coat layer 12, but an adhesive layer may also be formed on the opposite surface of the base material film 11 to the hard coat layer 12, and furthermore a release sheet may be laminated on the adhesive layer.

[Optical disk]

As shown in FIG. 2, an optical disk 2 according to the present embodiment comprises an optical disk substrate 21 having a convexoconcave pattern (pits or grooves/lands) thereon, a data recording layer 22 formed on the convexoconcave surface of the optical disk substrate 21, an adhesive layer 23 laminated on the data recording layer 22, and a hard coat film 1 comprising a base material film 11 and a hard coat layer 12 (the hard coat film 1 according to the above embodiment) laminated on the adhesive layer 23.

In the production of the optical disk 2, the hard coat film 1 is adhered onto the data recording layer 22 of the optical disk 2 via the adhesive layer 23; because warping of the hard coat film 1 is suppressed, the adhering operation of the hard coat film 1 can be carried out easily, and moreover adhesion of the hard coat film 1 to the data recording layer 22 is excellent. Furthermore, for the optical disk 2 obtained, warping caused by the hard coat film 1 is suppressed.

As the method of adhering the hard coat film 1 and the data recording layer 22 together, there can be used a method in which an adhesive (which includes the notion of a pressure-sensitive adhesive; likewise hereinafter) such as an ionizing radiation-curable adhesive is coated onto a rear surface of the hard coat film 1 (the surface on which the hard coat layer 12 is not present; likewise hereinafter) or onto the data recording layer 22, and the hard coat film 1 and the data recording layer 22 are adhered together, a method in which a pressure-sensitive adhesive layer (pressure-sensitive adhesive sheet) comprising an acrylic, urethane or silicone pressure-sensitive adhesive having a release sheet thereon is superposed onto the rear surface of the hard coat film 1 or onto the data recording layer 22, the release sheet is peeled off, and the hard coat film 1 and the data recording layer 22 are adhered together via the pressure-sensitive adhesive layer thus exposed, or a method in which an adhesive layer and a release sheet are laminated onto the rear surface of the hard coat film 1 in advance, the release sheet is peeled off, and the hard coat film 1 and the data recording layer 22 are adhered together via the adhesive layer thus exposed.

Due to the hard coat layer 12 of the hard coat film 1, the optical disk 2 according to the present embodiment has a sufficient surface hardness and thus is not readily scratched, and moreover has both excellent fingerprint wipability and excellent antistatic performance so that the surface can be easily kept clean, and furthermore is suppressed from warping. The optical disk 2 according to the present embodiment thus has a reduced error rate caused by scratches, fingerprints, electrostatically attached dust, or warping.

Note that the optical disk 2 according to the present embodiment is of a single-sided one-layer type, but may instead be of a single-sided two-layer type, there being no particular limitations on the form of the optical disk.

Examples

Following is a more detailed description of the present invention through examples and so on; however, the scope of the present invention is not limited by these examples and so on.

[Example 1]

53. 3 parts by mass of a hard coat agent (made by JSR, Desolite Z7524, containing polymerization initiator, solid concentration: 75 wt%) as a mixture of reactive particles (A) (using fine silica particles as inorganic oxide particles) and a second organic compound (C), 60 parts by mass of EO-modified pentaerythritol tetraacrylate(made by Shin-Nakamura Chemical Corporation, NK Ester ATM-35E, molecular weight: 1892, solid concentration: 100 wt%, tetrafunctional, EO content: 81.4%) as a first organic compound (B), and 6.0 parts by mass of (meth)acryloyl group-terminated polydimethylsiloxane (made by BYK-Chemie Japan, BYK-UV3570, solid concentration: 70 wt%) as a siloxane compound (D1) were mixed together, and propylene glycol monomethyl ether as a dilution solvent was further added to make the solid concentration 35 wt%, whereby a coating composition was obtained (D1 content (in terms of solids) : 4.0 wt%). Note that the mass ratio in terms of solids in the hard coat agent (Desolite Z7524) used was reactive particles (A) : organic compound (C) = 39: 61 (value measured by gel permeation chromatography, measurement apparatus: HLC-8020 made by Tosoh Corporation, column: Gardner Column HXL-H, TSK gel G2500HXL, TSK gel G2000HXL, TSK gel G1000HXL).

The coating composition obtained was applied using a #8 bar coater onto one surface of a polycarbonate film (made by Teijin Ltd., Pure-Ace C110-78, thickness: 78 $\mu$m) as a base material film such that the dried thickness would be 2 $\mu$m, and drying was carried out for 1 minute at 70 °C, and then irradiation was carried out with ultraviolet rays (irradiation conditions: intensity 310 mW/cm$^2$, amount of radiation 300 mJ/cm$^2$) under a nitrogen atmosphere, and consequently a hard coat film is produced.

[Example 2]

A coating composition was prepared as in Example 1 except that 60 parts by mass of a polyethylene glycol diacrylate (made by Shin-Nakamura Chemical Corporation, NK Ester A-400, molecular weight: 508, solid concentration: 100wt%, bifunctional, EO content: 78.0%) was used instead of the EO-modified pentaerythritol tetraacrylate as the first organic compound (B) (D1 content (in terms of solids): 4.0 wt%), and then a hard coat film was produced as in Example 1 using the coating composition obtained.

[Example 3]

A coating composition was prepared as in Example 1 except that 8.0 parts by mass of polyether-modified polydimethylsiloxane (made by BYK-Chemie Japan, BYK-300, solid concentration: 52 wt%) was used as a siloxane compound (D2) instead of the siloxane compound (D1) (D2 content (in terms of solids): 4.0 wt%), and then a hard coat film was produced as in Example 1 using the coating composition obtained.

[Example 4]

A coating composition was prepared as in Example 1 except that the content of the siloxane compound (D1) was made to be 4.0 parts by mass and 3.0 parts by mass of a perfluoroacryl group-containing oligomer (made by Dainippon Ink and Chemicals Inc., Defensa MCF-350SF, solid concentration: 100 wt%) was further added as a fluorinated compound (E2) (D1+E2 content (in terms of solids) : 5.5 wt%), and then a hard coat film was produced as in Example 1 using the coating composition obtained.

[Comparative Example 1]

A coating composition was prepared as in Example 1 except that 60 parts by mass of trimethylolpropane triacrylate (made by Shin-Nakamura Chemical Corporation, NK Ester A-TMPT-6EO, solid concentration: 100 wt%, trifunctional, EO content: 47.1%) was used instead of the EO-modified pentaerythritol tetraacrylate as the first organic compound (B) (D1 content (in terms of solids): 4.0 wt%), and then a hard coat film was produced as in Example 1 using the coating composition obtained.

[Comparative Example 2]

A coating composition was prepared as in Example 1 except that 60 parts by mass of EO-modified bisphenol A diacrylate which has an aromatic ring therein (made by Shin-Nakamura Chemical Corporation, NK Ester A-BPE-20, solid concentration: 100 wt%, bifunctional, EO content : 72.4%) was used instead of the EO-modified pentaerythritol tetraacrylate as the first organic compound (B) (D1 content (in terms of solids): 4.0 wt%), and then a hard coat film was produced as in Example 1 using the coating composition obtained.

[Comparative Example 3]

40 parts by mass of an EO-modified phosphate methacrylate (made by Daihachi Chemical Industry Co., Ltd., MR-200, EO content: 21.0 to 27.3%) as a first organic compound (B), 20 parts by mass of N,N-diethylaminoethyl methacrylate (made by Kyoeisha Chemical Co., Ltd., DE) as a second organic compound (C), and 35 parts by mass of pentaerythritol tetraacrylate (made by Kyoeisha Chemical Co. , Ltd., PE-4A), and also 0.1 parts by mass of a polyether-modified polymethylalkylsiloxane (made by BYK-Chemie Japan, BYK325) as a siloxane compound (D2), and 5 parts by mass of a photopolymerization initiator (made by Merck, Darocur 1173) were mixed together, whereby a coating composition was obtained. A hard coat film was produced as in Example 1 using the coating composition obtained.

[Test Examples]

1. Fingerprint wipability test

A fingerprint was put onto the surface of the hard coat film produced in each of the Examples and Comparative Examples, and then it was attempted to wipe off the fingerprint by wiping back and forth 5 times with tissue paper. After that, the surface state of the hard coat film was evaluated visually using the following judgment criteria. The results are shown in Table 1.
excellent : No mark after wiping
good : Slight mark after wiping
bad : Mark after wiping

2. Antistatic performance test (measurement of surface resistance value)

The hard coat film produced in each of the Examples and Comparative Examples was cut to a size of 100 mm × 100 mm, and the sample thus obtained was left for 1 hour at a temperature of 23 °C and a humidity of 50%. After that, the surface resistance value ($\Omega/\square$) was measured in accordance with JIS K6911 using a digital electrometer (made by Advantest Corporation, R8252). The results are shown in Table 1.

3. Measurement of spectral transmittance at 400 nm wave length

The spectral transmittance at 400 nm wave length of the hard coat film produced in each of the Examples and Comparative Examples was measured using a spectrophotometer (made by Shimadzu Corporation, UV-3101PC). The results are shown in Table 1.

4. Measurement of total light transmittance and haze

The total light transmittance and haze of the hard coat film produced in each of the Examples and Comparative Examples were measured in accordance with JIS K7105 using a haze meter (made by Nippon Denshoku Industries Co., Ltd., NDH2000). The results are shown in Table 1.

5. Measurement of taper abrasion amount

The taper abrasion amount of the hard coat layer of the hard coat film produced in each of the Examples and Comparative Examples was measured in accordance with JIS K7204 with a 250 g load (abrasive wheel: CS-10F). The results are shown in Table 1.

6. Measurement of contact angle

n-dodecane was dripped onto the surface of the hard coat film produced in each of the Examples and Comparative Examples, and the contact angle for the surface of the hard coat layer was measured using a surface contact angle meter (made by Kyowa Interface Science Co., Ltd., model CA-D). The results are shown in Table 1.

7. repellency test of oily pen

A line was drawn using an oily pen (made by Zebra, Mackee ultra-fine, black) on the surface of the hard coat film produced in each of the Examples and Comparative Examples, and the state of this line was evaluated visually using the following judgment criteria. The results are shown in Table 1.
good : Repelled
bad : Hardly repelled

8. Measurement of curl amount

The hard coat film produced in each of the Examples and Comparative Examples was cut into a 100 mm × 100 mm square, and this was taken as a sample. The sample was placed on a horizontal table with the hard coat layer side upward, the amount of rising up from the table was measured at each corner (4 points) of the sample, and the total of the amounts of rising up for the corners was taken as the curl amount. The results are shown in Table 1.

[Table 1]

| | Figerprint wipability | Surface resistance value ($\Omega/\square$) | Spectral transmittance at 400 nm wave length (%) | Total light transmittance | Haze (%) | Taper abrasion amount | Contact angle (°) | Oily pen repellency | Curl amount (mm) |
|---|---|---|---|---|---|---|---|---|---|
| Example 1 | excellent | $3.19 \times 10^{13}$ | 89.0 | 92.1 | 0.2 | 9.9 | 29 | good | 0 |
| Example 2 | excellent | $4.34 \times 10^{13}$ | 88.9 | 92.0 | 0.2 | 10.5 | 28 | good | 0 |
| Example 3 | good | $7.11 \times 10^{13}$ | 88.1 | 91.1 | 0.2 | 9.2 | 29 | good | 0 |
| Example 4 | good | $5.51 \times 10^{13}$ | 88.2 | 91.5 | 0.2 | 11.3 | 48 | good | 0 |
| Comparative example 1 | excellent | $6.29 \times 10^{15}$ | 88.3 | 91.9 | 0.2 | 9.8 | 29 | good | 11 |
| Comparative example 2 | excellent | $2.42 \times 10^{16}$ | 88.2 | 91.9 | 0.2 | 10.1 | 28 | good | 0 |
| Comparative example 3 | good | $3.01 \times 10^{15}$ | 87.9 | 91.8 | 0.2 | 16.9 | 24 | bad | 20 |

As is clear from Table 1, for the hard coat films produced in the Examples, the fingerprint wipability was excellent, and moreover the surface resistance value was low, and hence the antistatic performance was excellent.

INDUSTRIAL APPLICABILITY

A coating composition of the present invention is suitable for forming a hard coat layer on desired base material, in particular a base material film, and a hard coat film of the present invention is suitable as a protective film for an optical product, in particular an optical disk.

**Claims**

1. A coating composition comprising:

   reactive particles (A) in which an organic compound having at least one polymerizable unsaturated group in a molecule thereof is chemically bonded to inorganic oxide particles;
   an organic compound monomer or oligomer (B) having a polyethylene oxide chain and at least two polymerizable unsaturated groups in a molecule thereof and not having an aromatic ring and an alkyl chain having seven or more carbon atoms;
   an organic compound monomer or oligomer (C) having at least two polymerizable unsaturated groups in a molecule thereof, being an organic compound monomer or oligomer other than the organic compound monomer or oligomer (B); and
   a siloxane compound (D) having a dialkyl siloxane backbone, wherein
   a content of the organic compound monomer or oligomer (B) is in a range of from 20 to 80 wt%, and
   the organic compound monomer or oligomer (B) has a polyethylene oxide content, as calculated using the following formula, of not less than 50% and less than 100%:

   $$\text{polyethylene oxide content} = (\text{total atomic weight of } C_2H_4O$$
   $$\text{parts / molecular weight of organic compound monomer or oligomer}$$
   $$(B)) \times 100.$$

2. The coating composition according to claim 1, wherein the siloxane compound (D) is a siloxane compound (D1) having a dialkyl siloxane backbone and having at least one polymerizable unsaturated group in a molecule thereof, and
   the coating composition substantially does not contain a siloxane compound (D2) having a dialkyl siloxane backbone and not having a polymerizable unsaturated group in a molecule thereof.

3. The coating composition according to claim 1 or 2, further containing a fluorinated compound (E).

4. The coating composition according to any of claims 1 through 3, wherein a total content of the siloxane compound (D) having the dialkyl siloxane backbone and the fluorinated compound (E) is in a range of from 2 to 80 wt%.

5. A hard coat film comprising:

   a base material film; and
   a hard coat layer of thickness from 0.1 to 20 $\mu$m obtained by applying the coating composition according to any of claims 1 through 4 onto at least one surface of the base material film, and curing.

6. The hard coat film according to claim 5, having a spectral transmittance at 400 nm wave length of not less than 85%.

7. An optical recording medium having the hard coat film according to claim 5 or 6.

Fig.1

Fig.2

## INTERNATIONAL SEARCH REPORT

| | International application No. |
|---|---|
| | PCT/JP2005/021463 |

**A. CLASSIFICATION OF SUBJECT MATTER**
*C09D171/02*(2006.01), *C08J7/04*(2006.01), *C09D4/00*(2006.01), *C09D7/12*
(2006.01), *C09D183/04*(2006.01), *G02B1/10*(2006.01), *G11B7/24*(2006.01),
*G11B7/254*(2006.01), *G11B7/257*(2006.01), *C08L101/00*(2006.01)

According to International Patent Classification (IPC) or to both national classification and IPC

**B. FIELDS SEARCHED**

Minimum documentation searched (classification system followed by classification symbols)
*C09D171/02*(2006.01), *C08J7/04*(2006.01), *C09D4/00*(2006.01), *C09D7/12*
(2006.01), *C09D183/04*(2006.01), *G02B1/10*(2006.01), *G11B7/24*(2006.01),
*G11B7/254*(2006.01), *G11B7/257*(2006.01), *C08L101/00*(2006.01)

Documentation searched other than minimum documentation to the extent that such documents are included in the fields searched
Jitsuyo Shinan Koho 1922-1996 Jitsuyo Shinan Toroku Koho 1996-2006
Kokai Jitsuyo Shinan Koho 1971-2006 Toroku Jitsuyo Shinan Koho 1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P,A | JP 2005-162781 A (Mitsubishi Rayon Co., Ltd.), 23 June, 2005 (23.06.05), Full text (Family: none) | 1-7 |
| P,A | JP 2005-112900 A (TDK Corp.), 28 April, 2005 (28.04.05), Full text & US 2005-72336 A1 & WO 2005/033231 A1 | 1-7 |
| P,A | JP 2005-54029 A (Asahi Glass Co., Ltd.), 03 March, 2005 (03.03.05), Full text (Family: none) | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 06 March, 2006 (06.03.06) | Date of mailing of the international search report 14 March, 2006 (14.03.06) |
|---|---|
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2005/021463 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2002-3751 A  (Sekisui Chemical Co., Ltd.), 09 January, 2002 (09.01.02), Full text & US 2003-173545 A1    & WO 2001/077234 A1 | 1-7 |
| A | JP 2000-273272 A  (JSR Corp.), 03 October, 2000 (03.10.00), Full text & US 2002-58737 A1      & EP 1165682 A1 & WO 2000/047666 A1 | 1-7 |
| A | JP 8-325474 A  (Mitsubishi Chemical Corp.), 10 December, 1996 (10.12.96), Full text (Family: none) | 1-7 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6195749 A

- JP 2000273272 A